# EUROPÄISCHE PATENTSCHRIFT

(11) **EP 1 468 053 B1**
(45) Veröffentlichungstag und Bekanntmachung des Hinweises auf die Patenterteilung: **30.07.2014**
(21) Anmeldenummer: 03706362.5
(22) Anmeldetag: 17.01.2003
(51) Int. Cl.: C09D 5/08, C09D 5/10, C23F 11/08

(54) **COIL-COATING-LACKE, ENTHALTEND EINE KORROSIONSHEMMENDE MISCHUNG**
COIL COATING LACQUERS CONTAINING AN ANTI-CORROSIVE MIXTURE
VERNIS DE COUCHAGE SUR BANDE CONTENANT UN MELANGE ANTICORROSION

(30) Priorität: 24.01.2002 DE 10202545
(43) Veröffentlichungstag der Anmeldung: 20.10.2004
(73) Patentinhaber: BASF Coatings GmbH, 48165 Münster (DE)
(72) Erfinder: HINTZE-BRÜNING, Horst, 48165 Münster (DE); JANDEL, Lothar, 48165 Münster (DE); NEUHAUS, Ralf, 48317 Drensteinfurt (DE); RUCKPAUL, Markus, 69124 Heidelberg (DE); BÄUMER, Marc, 48165 Münster (DE)
(74) Vertreter: Leifert & Steffan
(86) Internationale Anmeldenummer: PCT/EP2003/000436
(87) Internationale Veröffentlichungsnummer: WO 2003/062328

(56) Entgegenhaltungen:
- EP-A- 0 760 387
- DE-A- 3 529 145
- DE-A- 10 022 075
- DE-A- 19 623 268
- US-A- 4 086 096
- US-A- 4 119 763
- US-A- 4 277 415
- US-A- 4 837 253
- US-A- 6 126 730

## Beschreibung

Die vorliegende Erfindung betrifft Coil-Coating-Lacke, die eine korrosionshemmende Mischung enthalten.

Coil-Coating-Lacke, die überwiegend im Walzenauftrag mit gegenläufigen Walzen auf Stahlbänder, insbesondere verzinkte Stahlbänder, oder Aluminiumbänder aufgetragen werden, sind bekannt. Da die Metallverarbeitung erst nach dem Lackieren erfolgt, müssen die Beschichtungen extrem hohe mechanische Beständigkeit aufweisen. Typische Trocknungszeiten sind 20 bis 40 Sekunden bei einer Metalltemperatur von 200 bis 260°C. Üblicherweise werden die beschichteten Coils im Baubereich für die Herstellung von Decken- und Wandelementen, Türen, Rohrisoiierungen, Rollläden oder Fensterprofilen, im Fahrzeugbereich für die Herstellung von Verkleidungen von Caravans oder Nutzfahrzeugaufbauten und im Haushaltsbereich für die Herstellung von Profilelementen für Wasch- und Geschirrspülmaschinen, Gefrierschränke, Kühlschränke oder Herde verwendet (vgl. Römpp Lexikon Lacke und Druckfarben, Georg Thieme Verlag, Stuttgart, New York, 1998, »Bandbeschichtung«, Seite 55, und »Coil-Coating-Lacke«, Seite 116).

Die Offenlegungsschrift DE 196 23 268 A1 beschreibt Pulverlackzusammensetzungen, die ein organisches filmbildendes Bindemittel, als ersten Korrosionsinhibitor heterozyklyische Carbonsäuren bzw. deren Derivate und als zweiten Korrosionsinhibitor ein Calcium-modifiziertes Silikatpigment enthalten.

Die Patentanmeldung EP 0760 387 A1 beschreibt Antikorrosionspigmente, die erhalten werden unter Verwendung von Metallorganophosphaten.

Die Offenlegungsschrift DE 100 22 075 A1 beschreibt leitfähige und schweißbare Korrosionsschutz-Zusammensetzungen zur Beschichtung von Metalloberflächen. Die Zusammensetzungen enthalten ein organisches Bindemittel, gegebenenfalls ein Korrosionsschutzpigment, ein Leitfähigkeitspigment und gegebenenfalls ein Lösemittel.

Das Patent US 4,277,415 beschreibt Addukte von tetrasubstituierten Pyrophosphatotitanaten mit Phosphiten und/Aminen Die Addukte werden als Korrosionsinhibitoren eingesetzt.

Die Offenlegungsschrift DE 35 29 145 A1 beschreibt Pigmente, die bei der Herstellung anti-korrosiver Überzüge einsetzbar sind. Sie sind erhältlich, indem man anorganische anti-korrosive Pigmente mit einem Titanderivat als Kupplungsmittel behandelt.

Um die Herstellung von Kraftfahrzeugen weiter technisch zu vereinfachen und wirtschaftlicher zu gestalten, ist man bestrebt, vorgeformte, beschichtete Profilelemente und Formteile für die Herstellung von Karosserien einzusetzen. Dazu ist es aber erforderlich, dass mit den vorgeformten, beschichteten Profilelementen und Formteilen der Korrosionsschutz für die Karosserien weiter verbessert wird, sodass Korrosionsschutzmaßnahmen, wie das Hohlraumfluten mit Wachs, überflüssig werden. Außerdem wird gefordert, dass die Korrosionsschutzwirkung von kathodisch abgeschiedenen und thermisch gehärteten Elektrotauchlackierungen auf Coils weiter verbessert wird oder dass ganz auf die Elektrotauchlackierungen verzichtet werden kann. Außerdem müssen die beschichteten Coils und die hieraus hergestellten Profilelemente und Formteile, insbesondere für die Verwendung im Automobilbereich, punktschweißbar sein.

Aufgabe der vorliegenden Erfindung ist es, neue Coil-Coating-Lacke bereitzustellen, die Beschichtungen liefern, die eine extrem hohe mechanische Beständigkeit und eine besonders gute Korrosionsschutzwirkung zeigen so dass im Bedarfsfall auf kathodisch abgeschiedene und thermisch gehärtete Elektrotauchlackierungen verzichtet werden kann. Außerdem soll die besonders gute Korrosionsschutzwirkung auch ohne Schwermetalle erzielt werden können. Außerdem sollen die neuen Coil-Coating-Lacke im Bedarfsfall in einfacher Weise durch Zusatz von elektrisch leitfähigen Pigmenten punktschweißbar ausgerüstet werden können, ohne dass ihre sonstigen vorzüglichen anwendungstechnischen Eigenschaften darunter leiden.

Demgemäß wurden Coil-Coating-Lacke enthaltend eine korrosionshemmende Mischung, enthaltend
(A 1) korrosionshemmende Pigmente, aus der Gruppe, bestehend aus Zinkphosphat, Zinkmetaborat und Bariummetaborat-Monohydrat,
(A 2) amorphes Siliziumdioxid, das mit Metallionen modifiziert ist, und
(A3) mindestens eine Verbindung der allgemeinen Formel (II):

   RO-M[-O-P(O)(OH)-O-P(O)(OR')₂]₃ HP(O)(OR²)₂ (II),

   worin die Variablen die folgende Bedeutung haben:
   - M: ausgewählt aus der Gruppe der Lewis-Akzeptoren,
   - R, R1 und R2: unabhängig voneinander aliphatische und cycloaliphatische Reste gefunden.
   Vorteilhafte Ausgestaltungen der erfindungsgemäßen Coil-Coating-Lacke ergeben sich aus den abhängigen Patentansprüchen.

Im Folgenden werden die Coil-Coating-Lacke als »erfindungsgemäße Lacke« bezeichnet.

Im Hinblick auf den Stand der Technik war es überraschend und für den Fachmann nicht vorhersehbar, dass die Aufgabe, die der vorliegenden Erfindung zugrundelag, mit Hilfe der erfindungsgemäßen Lacke gelöst werden konnte. Insbesondere war es überraschend, dass der mit den erfindungsgemäßen Lacken erzielte Korrosionsschutz von Coils demjenigen von kathodisch abgeschiedenen und thermisch gehärteten Elektrotauchlackierungen (KTL) vergleichbar war. Noch mehr überraschte, dass die korrosionshemmenden Mischungen ohne Verlust des hervorragenden Korrosionsschutzes zusammen mit elektrisch leitfähigen Pigmenten verwendet werden konnten, wenn die aus den erfindungsgemäßen Lacken hergestellten Beschichtungen punktschweißbar sein sollten.

Der erste wesentliche Bestandteil der erfindungsgemäßen Lacke ist mindestens ein korrosionshemmendes Pigment (A 1) aus der Gruppe, bestehend aus Zinkphosphat, Zinkmetaborat und Bariummetaborat-Monohydrat.

Zinkphosphat ist eine handelsübliche Verbindung wird beispielsweise unter der Marke Sicor ® ZNP/S vertrieben. Dgl. ist Bariummetaborat-Monohydrat eine handelsübliche Verbindung und wird beispielsweise unter der Marke Butrol ® 11 M2 vertrieben.

Der zweite wesentliche Bestandteil der erfindungsgemäßen Lacke ist ein amorphes Siliziumdioxid (A 2), das mit Metallionen modifiziert ist. Vorzugsweise werden die Metallionen aus der Gruppe, bestehend aus Alkalimetallionen, Erdalkalimetallionen, insbesondere Calciumionen, Scandium-, Yttrium- und Lanthanionen, Lanthanidionen sowie Zink- und Aluminiumionen, ausgewählt. Bevorzugt werden Calciumionen angewandt. Mit Calciumionen modifiziertes amorphes Siliziumdioxid (A 2) ist auch ein handelsübliches Produkt und wird beispielsweise unter der Marke Shieldex ® vertrieben.

Der dritte wesentliche Bestandteil der erfindungsgemäßen Lacke ist mindestens eine Verbindung der allgemeinen Formel II.

In der allgemeinen Formel II steht die Variable M für mindestens ein Zentralatom, das aus der Gruppe der Lewis-Akzeptoren ausgewählt wird. Vorzugsweise wird es aus der Gruppe, bestehend aus Aluminium, Titan und Zirkonium, ausgewählt. Bevorzugt ist M = Titan.

Lewis-Akzeptoren und Lewis-Donoren oder -Donatoren sind Lewis-Säuren und -Basen i. S. d. Säure-Base-Begriffs von Lewis.

In der allgemeinen Formel II stehen die Variablen R, R¹ und R² unabhängig voneinander für aliphatische und cycloaliphatische, insbesondere aliphatische, Reste. Vorzugsweise enthalten die aliphatische Reste 3 bis 20 Kohlenstoffatome. Beispiele geeigneter aliphatischer Reste sind Propyl, Isopropyl, Butyl, sec.-Butyl, Isobutyl, tert.- Butyl, n-Pentyl, Isoamyl, n-Hexyl, n-Heptyl, Octyl, Isoctyl, Nonyl, Decyl, Undecyl, Dodecyl, Tridecyl, Tetradecyl, Pentadecyl, Hexadecyl, Heptadecyl, Octadecyl, Nonadecyl und Eicosanyl, bevorzugt Isopropyl, Octyl und Isooctyl. Besonders bevorzugt ist R Isopropyl, R¹ Octyl und R² Isooctyl.

Ganz besonders bevorzugt wird somit das Addukt von Isopropyl-tris (dioctylpyrophosphato)-titanat mit einem Mol Diisooctylphosphit als Bestandteil (A 3) eingesetzt. Das Addukt ist eine handelsübliche Verbindung und wird beispielsweise unter der Marke KEN-REACT ® von der Firma Kenrich Petrochemicals vertrieben.

Das Gewichtsverhältnis der Bestandteile (A 1), (A 2) und (A 3) kann breit variieren und richtet sich nach den Erfordernissen des Einzelfalls. Vorzugsweise liegen die Bestandteile (A 1), (A 2) und (A 3) in einem Gewichtsverhältnis von 1 : (0,5 bis 1,5, insbesondere 0,8 bis 1,2) : (0,1 bis 2, insbesondere 0,2 bis 0,6) vor. Dabei kann das Gewichtsverhältnis auch 1 : (0,5 bis 1,5) : (0,2 bis 0,6) oder 1 : (0,8 bis 1,2) : 0,1 bis 2) betragen. Besonders bevorzugt ist das Gewichtsverhältnis 1 : (0,8 bis 1,2) : (0,2 bis 15 0,6).

Die erfindungsgemäßen Lacke können des Weiteren mindestens ein elektrisch leitfähiges Pigment (A 4) enthalten. Vorzugsweise weist es eine mindestens bimodale, insbesondere bimodale, Teilchengrößenverteilung auf. Bevorzugt wird das elektrisch leitfähige Pigment (A 4) aus der Gruppe, bestehend aus elementarem Silizium und metallischen, wasserunlöslichen Phosphiden, insbesondere CrP, MnP, Fe₃P, Fe₂P, Ni₂P, NiP₂ und NiP₃, ausgewählt. Besonders bevorzugt werden Eisenphosphide verwendet.

Ganz besonders bevorzugt werden Eisenphosphide mit bimodaler Teilchengrößenverteilung verwendet. Besonders bevorzugt wird ein Gemisch aus feinteiligen Eisenphosphiden und aus grobteiligen Eisenphosphiden verwendeten. Vorzugsweise weisen 90 Gew.% der feinteiligen Eisenphosphide eine mittlere Teilchengröße von 3 bis 16 µm und 90 Gew.% der grobteiligen Eisenphosphide eine mittlere Teilchengröße von 5 bis 22 µm auf. Vorzugsweise werden die feinteiligen Eisenphosphide und die grobteiligen Eisenphosphide in einem Gewichtsverhältnis von 1,4 : 1 bis 1 : 1,4, bevorzugt 1,3 : 1 bis 1 : 1,3, besonders bevorzugt 1,2 : 1 bis 1 : 1,2 und insbesondere 1 : 1 eingesetzt.

Die Eisenphosphide sind handelsübliche Produkte und werden beispielsweise unter der Marke Ferrophos ® (feinteilig: Ferrophos ® HRS 2132; grobteilig: Ferrophos ® HRS 2131) vertrieben.

Der Gehalt der erfindungsgemäßen L a c k e an dem Bestandteil (A 4) kann breit variieren. Vorzugsweise liegt das Gewichtsverhältnis der Bestandteile (A 1), (A 2) und (A 3) einerseits zu (A 4) andererseits bei 1 : 20 bis 1 : 5., bevorzugt 1 : 15 bis 1 : 5, besonders bevorzugt 1 : 12 bis 1 : 6, ganz besonders bevorzugt 1 : 10 bis 1 : 7 und insbesondere 1 : 9 bis 1 : 7.

Die erfindungsgemäßen Lacke können zahlreichen Verwendungszwecken dienen. So können sie als solche für den Korrosionsschutz von Formteilen aus Stahl, insbesondere verzinktem Stahl, und Aluminium dienen. Sie dienen dem Korrosionsschutz von Coils, bevorzugt von Coils aus Stahl, insbesondere verzinktem Stahl, und Aluminium.

Die erfindungsgemäßen Lacke können aber auch zu Korrosionsschutzzwecken üblichen und bekannten Beschichtungsstoffen zugesetzt werden. Dabei kann es sich um Einkomponenten- und Mehrkomponentensysteme, insbesondere Zweikomponentensysteme, handeln. Die Beschichtungsstoffe können auf der Basis organischer Lösemittel (konventionelle Beschichtungsstoffe) oder wässrigen Medien (wässrige Beschichtungsstoffe) formuliert werden. Sie können aber auch im wesentlichen oder völlig lösemittel- und wasserfreie flüssige Beschichtungsstoffe (100%-Systeme) oder im Wesentlichen oder völlig lösemittel- und wasserfreie, feste, pulverförmige Beschichtungsstoffe (Pulverlacke) sein. Die Pulverlacke können auch in der Form von wässrigen Dispersionen vorliegen, die auch als Pulverslurries bezeichnet werden.

Die erfindungsgemäßen Lacke können thermisch, mit aktinischer Strahlung oder thermisch und mit aktinischer Strahlung gehärtet werden. Unter aktinischer Strahlung wird hier und im folgenden elektromagnetische Strahlung, wie nahes Infrarot, sichtbares Licht, UV- Strahlung oder Röntgenstrahlung, insbesondere UV-Strahlung, oder Korpuskularstrahlung, wie Elektronenstrahlung, verstanden. Die gemeinsame Härtung mit Hitze und aktinischer Strahlung wird von der Fachwelt auch als Dual-Cure bezeichnet.

Die erfindungsgemäßen Lacke können Einkomponenten- und Mehrkomponentensysteme, insbesondere Zweikomponentensysteme, sein; vorzugsweise sind sie

Einkomponentensysteme. Sie können auf der Basis organischer Lösemittel oder wässriger Medien formuliert werden. Sie können aber auch im wesentlichen oder völlig lösemittel- und wasserfreie flüssige Beschichtungsstoffe (100%-Systeme) oder im wesentlichen oder völlig lösemittel- und wasserfreie Pulverlacke sein. Die Pulverlacke können auch in der Form von Pulverslurries vorliegen. Ganz besonders bevorzugt werden konventionelle erfindungsgemäße Lacke verwendet.

Die erfindungsgemäßen Lacke können thermisch, mit aktinischer Strahlung oder thermisch und mit aktinischer Strahlung gehärtet werden. Vorzugsweise werden sie thermisch gehärtet. Dabei können sie thermisch selbstvernetzend oder fremdvernetzend sein. Vorzugsweise sind die fremdvernetzend.

Vorzugsweise enthalten die erfindungsgemäßen Lacke den Bestandteil (A 1) in einer Menge von 0,1 bis 10, bevorzugt 0,3 bis 8, besonders bevorzugt 0,5 bis 7, ganz besonders bevorzugt 1 bis 5 und insbesondere 1,5 bis 4 Gew.%, jeweils bezogen auf den Festkörper des jeweiligen erfindungsgemäßen Lacks.

Der Bestandteil (A 2) ist in den erfindungsgemäßen Lacken vorzugsweise in einer Menge von 0,1 bis 10, bevorzugt 0,3 bis 8, besonders bevorzugt 0,5 bis 7, ganz besonders bevorzugt 1 bis 5 und insbesondere 1,5 bis 4 Gew.%, jeweils bezogen auf den Festkörper des jeweiligen erfindungsgemäßen Lacks, enthalten.

Vorzugsweise enthalten die erfindungsgemäßen Lacke den Bestandteil (A 3) in einer Menge von 0,01 bis 5, bevorzugt 0,03 bis 4, besonders bevorzugt 0,05 bis 3, ganz besonders bevorzugt 0,1 bis 2,5 und insbesondere 0,2 bis 2 Gew.%, jeweils bezogen auf den Festkörper des jeweiligen erfindungsgemäßen Lacks.

Vorzugsweise werden innerhalb dieser Grenzen die vorstehend beschriebenen vorteilhaften Gewichtsverhältnisse (A 1) : (A 2) : (A 3) eingestellt.

Enthalten die erfindungsgemäßen Lacke noch den Bestandteil (A 4), ist er hierin vorzugsweise in einer Menge von 10 bis 80, bevorzugt 15 bis 75, besonders bevorzugt 20 bis 75 und insbesondere 30 bis 75 Gew.%, jeweils bezogen auf den Festkörper des jeweiligen erfindungsgemäßen Lacks, enthalten. Vorzugsweise werden hierbei die vorstehend beschriebenen bevorzugten Gewichtsverhältnisse von (A 1), (A 2) und (A 3) einerseits zu (A 4) andererseits eingesetzt.

Außer der Mischung enthalten die erfindungsgemäßen Lacke Bestandteile, wie sie auf dem Gebiet der Coil-Coating-Lacke üblich und bekannt sind, wie Bindemittel, Vernetzungsmittel, organische Lösemittel und Zusatzstoffe.

Vorzugsweise werden die Bindemittel aus der Gruppe, bestehend aus physikalisch, thermisch, mit aktinischer Strahlung sowie thermisch und mit aktinischer Strahlung härtbaren, statistisch, alternierend und blockartig aufgebauten, linearen, verzweigten und kammartig aufgebauten (Co)Polymerisaten von ethylenisch ungesättigten Monomeren, Polyadditionsharzen und/oder Polykondensationsharzen, ausgewählt. Zu diesen Begriffen wird ergänzend auf Römpp Lexikon Lacke und Druckfarben, Georg Thieme Verlag, Stuttgart, New York, 1998, Seite 457, »Polyaddition« und »Polyadditionsharze (Polyaddukte)«, sowie Seiten 463 und 464, »Polykondensate«, »Polykondensation« und »Polykondensationsharze« verwiesen.

Bevorzugt werden die Bindemittel aus der Gruppe, bestehend aus (Meth)Acrylat(co)polymerisaten, partiell verseiften Polyvinylestern, Polyestern, Alkyden, Polylactonen, Polycarbonaten, Polyethern, Epoxidharz-Amin-Addukte, Polyharnstoffe, Polyamide, Polyimiden und Polyurethanen, inbesondere Polyestern, ausgewählt.

Die Herstellung von Polyestern wird beispielsweise in dem Standardwerk Ullmanns Encyklopädie der technische Chemie, 3. Auflage, Band 14, Urban & Schwarzenberg, München, Berlin, 1963, Seiten 80 bis 89 und Seiten 99 bis 105, sowie in den Büchern: "Résines Alkydes-Polyesters" von J. Bourry, Paris, Verlag Dunod, 1952, "Alkyd Resins" von C. R. Martens, Reinhold Publishing Corporation, New York, 1961, sowie "Alkyd Resin Technology" von T. C. Patton, Intersience Publishers, 1962, beschrieben.

Die selbstvernetzenden Bindemittel der erfindungsgemäßen thermisch härtbaren Lacke und der erfindungsgemäßen Dual-Cure-Lacke enthalten reaktive funktionelle Gruppen, die mit Gruppen ihrer Art ("mit sich selbst") oder mit komplementären reaktiven funktionellen Gruppen Vernetzungsreaktionen eingehen können.

Die fremdvernetzenden Bindemittel enthalten reaktive funktionelle Gruppen, die mit komplementären reaktiven funktionellen Gruppen, die in Vernetzungsmitteln vorliegen, Vernetzungsreaktionen eingehen können (vgl. auch Römpp Lexikon Lacke und Druckfarben, Georg Thieme Verlag, Stuttgart, New York, 1998, »Härtung«, Seiten 274 bis 276, insbesondere Seite 275).

Beispiele geeigneter erfindungsgemäß zu verwendender komplementärer reaktiver funktioneller Gruppen sind in der folgenden Übersicht zusammengestellt. In der Übersicht steht die Variable R⁴ für einen acyclischen oder cyclischen aliphatischen, einen aromatischen und/oder einen aromatisch-aliphatischen (araliphatischen) Rest; die Variablen R⁵ und R⁶ stehen für gleiche oder verschiedene aliphatische Reste oder sind miteinander zu einem aliphatischen oder heteroaliphatischen Ring verknüpft.

### Übersicht: Beispiele komplementärer reaktiver funktioneller Gruppen

| **Bindemittel und Vernetzungsmittel** | |
|---|---|
| **oder** | |
| **Vernetzungsmittel und Bindemittel** | |
| -SH | -C(O)-OH |
| -NH₂ | -C(O)-O-C(O)- |
| -OH | -NCO |
| -O-(CO)-NH-(CO)-NH₂ | -NH-C(O)-OR⁴ |
| -O-(CO)-NH₂ | -CH₂-OH |
| >NH | -CH₂-O R⁴ -NH-CH₂-O R⁴ |
| | -NH-CH₂-OH |
| | -N(-CH₂-O R⁴)₂ |
| | -NH-C(O)-CH(-C(O)OR⁴)₂ |
| | -NH-C(O)-CH(-C(O)O R⁴)(-C(O)-R⁴) |
| | -NH-C(O)-NR⁵R⁶ |
| | > Si(O R⁴)₂ |
| | 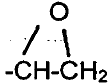 |
| | 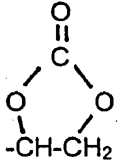 |
| -C(O)-OH | 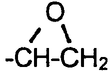 |
| | -N=C=N- |
| | -C(O)-N(CH₂-CH₂-OH)₂ |

Die Auswahl der jeweiligen komplementären Gruppen richtet sich zum einen danach, daß sie bei der Herstellung, der Lagerung und der Applikation der erfindungsgemäßen Lacke keine unerwünschten Reaktionen, insbesondere keine vorzeitige Vernetzung, eingehen und/oder gegebenenfalls die Härtung mit aktinischer Strahlung nicht stören oder inhibieren dürfen, und zum anderen danach, in welchem Temperaturbereich die Vernetzung stattfinden soll.

Vorzugsweise werden bei den erfindungsgemäßen Lacken Vernetzungstemperaturen bis zu 270°C angewandt. Es werden daher vorzugsweise Thio-, Hydroxyl-, N-Methylolamino- N-Alkoxymethylamino-, Imino-, Carbamat-, Allophanat- und/oder Carboxylgruppen, bevorzugt Hydroxyl- oder Carboxylgruppen, einerseits und vorzugsweise Vernetzungsmittel mit Anhydrid-, Carboxyl-, Epoxy-, blockierten Isocyanat-, Urethan-, Methylol-, Methylolether-, Siloxan-, Carbonat-, Amino-, Hydroxy- und/oder beta-Hydroxyalkylamidgruppen, bevorzugt Epoxy-, beta-Hydroxyalkylamid-, blockierte isocyanat-, Urethan- oder Alkoxymethylaminogruppen, andererseits angewandt.

Im Falle selbstvernetzender erfindungsgemäßer Lacke, enthalten die Bindemittel insbesondere Methylol-, Methylolether- und/oder N-Alkoxymethylaminogruppen.

Komplementäre reaktive funktionelle Gruppen, die für die Verwendung in den fremdvernetzenden erfindungsgemäßen Lacken besonders gut geeignet sind, sind
- Carboxylgruppen einerseits und Epoxidgruppen und/oder beta-Hydroxyalkylamidgruppen andererseits sowie
- Hydroxylgruppen einerseits und blockierte Isocyanat-, Urethan- oder Alkoxymethylaminogruppen, insbesondere blockierte Isocyanatgruppen, andererseits.

Die Funktionalität der Bindemittel bezüglich der vorstehend beschriebenen reaktiven funktionellen Gruppen kann sehr breit variieren und richtet sich insbesondere nach der Vernetzungsdichte, die man erzielen will, und/oder nach der Funktionalität der jeweils angewandten Vernetzungsmittel. Beispielsweise liegt im Falle carboxylgruppenhaltiger Bindemittel die Säurezahl vorzugsweise bei 10 bis 100, bevorzugt 15 bis 80, besonders bevorzugt 20 bis 75, ganz besonders bevorzugt 25 bis 70 und insbesondere 30 bis 65 mg KOH/g. Oder im Falle hydroxylgruppenhaltiger Bindemittel liegt die OH-Zahl vorzugsweise bei 15 bis 300, bevorzugt 20 bis 250, besonders bevorzugz 25 bis 200, ganz besonders bevorzugt 30 bis 150 und insbesondere 35 bis 120 mg KOH/g. Oder im Falle epoxidgruppenhaltiger Bindemittel liegt das Epoxidäquivalentgewicht vorzugsweise bei 400 bis 2.500, bevorzugt 420 bis 2.200, besonders bevorzugt 430 bis 2.100, ganz besonders bevorzugt 440 bis 2.000 und indesondere 440 bis 1.900.

Die vorstehend beschriebenen komplementären funktionellen Gruppen können nach den üblichen und bekannten Methoden der Polymerchemie in die Bindemittel eingebaut werden. Dies kann beispielsweise durch den Einbau von Monomeren, die die entsprechenden reaktiven funktionellen Gruppen tragen, und/oder mit Hilfe polymeranaloger Reaktionen geschehen.

Die Bindemittel der erfindungsgemäßen Dual-Cure-Lacke und der rein mit aktinischer Strahlung härtbaren erfindungsgemäßen Lacke enthalten desweiteren im statistischen Mittel mindestens eine, vorzugsweise mindestens zwei, Gruppe(n) mit mindestens einer mit aktinischer Strahlung aktivierbaren Bindung pro Molekül.

Im Rahmen der vorliegenden Erfindung wird unter einer mit aktinischer Strahlung aktivierbaren Bindung eine Bindung verstanden, die bei Bestrahlen mit aktinischer Strahlung reaktiv wird und mit anderen aktivierten Bindungen ihrer Art Polymerisationsreaktionen und/oder Vernetzungsreaktionen eingeht, die nach radikalischen und/oder ionischen Mechanismen ablaufen. Beispiele geeigneter Bindungen sind Kohlenstoff-Wasserstoff-Einzelbindungen oder Kohlenstoff-Kohlenstoff-, Kohlenstoff-Sauerstoff-, Kohlenstoff-Stickstoff-, Kohlenstoff-Phosphor -oder Kohlenstoff-Silizium-Einzelbindungen oder -Doppelbindungen.

Es können in den erfindungsgemäßen Dual-Cure-Lacken indes auch Gemische aus rein thermisch härtbaren und rein mit aktinischer Strahlung härtbaren Bindemitteln angewandt werden.

Der Gehalt der erfindungsgemäßen Lacke an den vorstehend beschriebenen Bindemitteln kann breit variieren und richtet sich nach den Erfordernissen des Einzelfalls, insbesondere nach der Funktionalität der gegebenenfalls mitverwendeten Vernetzungsmittel. Vorzugsweise werden die Bindemittel in einer Menge angewandt, dass ein Pigment/Bindemittel-Verhältnis > 2,4 : 1, bevorzugt > 2,6 : 1 und besonders bevorzugt > 2,8 : 1 resultiert. Ganz besonders bevorzugt liegt das Pigment/Bindemittel-Verhältnis bei 2,9 : 1 bis 3,2 : 1.

Beispiele geeigneter Vernetzungsmittel sind Aminoplastharze, wie sie beispielsweise in Römpp Lexikon Lacke und Druckfarben, Georg Thieme Verlag, 1998, Seite 29, »Aminoharze«, dem Lehrbuch "Lackadditive" von Johan Bieleman, Wiley-VCH, Weinheim, New York, 1998, Seiten 242 ff., dem Buch "Paints, Coatings and Solvents", second completely revised edition, Edit. D. Stoye und W. Freitag, Wiley-VCH, Weinheim, New York, 1998, Seiten 80 ff., den Patentschriften US 4 710 542 A 1 oder EP-B-O 245 700 A 1 sowie in dem Artikel von B. Singh und Mitarbeiter "Carbamylmethylated Melamines, Novel Crosslinkers for the Coatings Industry", in Advanced Organic Coatings Science and Technology Series, 1991, Band 13, Seiten 193 bis 207, beschrieben werden, Carboxylgruppen enthaltende Verbindungen oder Harze, wie sie beispielsweise in der Patentschrift DE 196 52 813 A 1 beschrieben werden, Epoxidgruppen enthaltende Verbindungen oder Harze, wie sie beispielsweise in den Patentschriften EP 0 299 420 A 1, DE 22 14 650 B 1, DE 27 49 576 B 1, US 4,091,048 A 1 oder US 3,781,379 A 1 beschrieben werden, unblockierte und blockierte Polyisocyanate, wie sie beispielsweise in den Patentschriften US 4,444,954 A 1, DE 196 17 086 A 1, DE 196 31 269 A 1, EP 0 004 571 A1 oder EP 0 582 051 A 1 beschrieben werden, und/oder Tris(alkoxycarbonylamino)triazine, wie sie in den Patentschriften US 4,939,213 A 1, US 5,084,541 A 1, US 5,288,865 A 1 oder EP 0 604 922 A 1 beschrieben werden.

Besonders bevorzugt werden blockierte Polyisocyanate eingesetzt. Insbesondere werden die mit den aus der deutschen Patentanmeldung DE 199 14 896 A 1, Spalte 12, Zeile 13, bis Spalte 13, Zeile 2, bekannten Blockierungsmitteln, speziell mit Caprolactam, blockierten Polyisocyanate verwendet.

Der Gehalt der erfindungsgemäßen Lacke an den Vernetzungsmittel kann breit variieren und richtet sich nach den Erfordernissen des Einzelfalls, insbesondere nach der Funktionalität der mitverwendet Bindemittel.

Besonders bevorzugt werden Einkomponentensysteme aus hydroxylgruppenhaltigen, Polyestern, und mit Caprolactam blockierten Polyisocyanaten verwendet. Diese Einkomponentensysteme sind handelsübliche Produkte und werden beispielsweise unter der Marke Vesticoat ® EPUB 877 vertrieben.

Vorzugsweise liegt der Gehalt der erfindungsgemäßen Lacke an Vernetzungsmitteln und Bindemitteln bei 10 bis 60, bevorzugt 12 bis 55, besonders bevorzugt 15 bis 50 und insbesondere 15 bis 45 Gew.%, jeweils bezogen auf den Festkörper des jeweiligen erfindungsgemäßen Lacks.

Der erfindungsgemäße Lack kann ein organisches Lösemittel enthalten. Beispiele üblicher und bekannter Lösemittel werden in D. Stoye und W. Freitag, (Hrsg.), »Paints, Coatings and Solvents, 2nd Completely Revised Editon, Wiley-VCH, Weinheim New York, 1998, »14.9. Solvent Groups«, Seiten 327 bis 373 beschrieben. In dem erfindungsgemäßen Lack werden sie vorzugsweise in einer Menge von 5 bis 50, insbesondere 5 bis 40 Gew.%, bezogen auf den erfindungsgemäßen Lack, eingesetzt.

Nicht zuletzt enthält der erfindungsgemäße Lack mindestens einen lacktypischen Zusatzstoff, der aus der Gruppe der anorganischen und organischen Zusatzstoffe ausgewählt wird.

Beispiele geeigneter lacktypischer Zusatzstoffe sind farb- und/oder effektgebende Pigmente, Füllstoffe, Nanopartikel, Reaktivverdünner für die thermische Härtung oder die Härtung mit aktinischer Strahlung, Rheologiehilfsmittel, UV-Absorber, Lichtschutzmittel, Radikalfänger, Initiatoren für die radikalische Polymerisation, Katalysatoren für die thermische Vernetzung, Photoinitiatoren und -coinitiatoren, Slipadditive, Polymerisationsinhibitoren, Entschäumer, Emulgatoren, Entgasungsmittel, Netz- und Dipergiermittel, Haftvermittler, Verlaufmittel, filmbildende Hilfsmittel, rheologiesteuernde Additive (Verdicker), Flammschutzmittel, Sikkative, Trockungsmittel, Hautverhinderungsmittel, sonstige Korrosionsinhibitoren, Wachse und Mattierungsmittel, wie sie aus dem Lehrbuch »Lackadditive« von Johan Bieleman, Wiley-VCH, Weinheim, New York, 1998, oder der deutschen Patentanmeldung DE 199 14 896 A 1, Spalte 13, Zeile 56, bis Spalte 15, Zeile 54, bekannt sind.

Beispiele besonders gut geeigneter Zusatzstoffe sind Silylamine, wie Bis(trimethylsilyl)amin, das unter der Marke Aerosil ® R 812 S vertrieben wird, Epichlorhydrine, wie Bisphenol-A-Epichlorhydrin, das unter der Marke Epikote ® 834 vertrieben wird, ein selbstvemetzendes Urethanharz, das unter der Marke Desmodur ® VPLS 2253 vertrieben wird, und Dibutylzinndilaurat.

Die Herstellung der erfindungsgemäßen Lacke weist keine methodischen Besonderheiten auf, sondern erfolgt durch das Vermischen der vorstehend beschriebenen Bestandteile. Dabei können Mischaggregate, wie Rührkessel, Dissolver, In-line-Dissolver, Perlmühlen, Rührwerksmühlen, statische Mischer, Zahnkranz-Dispergatoren oder Extruder, verwendet werden. Gegebenenfalls wird unter Ausschluß von aktinischer Strahlung gearbeitet, um eine Schädigung des erfindungsgemäßen Lacks, der allein oder zusätzlich mit aktinischer Strahlung härtbar ist, zu vermeiden. Bei der Herstellung können die einzelnen Bestandteile der erfindungsgemäßen Mischung separat eingearbeitet werden. Die erfindungsgemäße Mischung kann aber auch separat hergestellt und mit den übrigen Bestandteilen vermischt werden. Vorzugsweise werden die einzelnen Bestandteile der erfindungsgemäßen Mischung separat eingearbeitet.

Die erfindungsgemäßen Lacke sind hervorragend für die Bandbeschichtung geeignet. Das Bandbeschichtung geht aus von einem Metallband, das in üblicher und bekannter Weise gereinigt, entfettet, passiviert, chemisch behandelt, gespült und getrocknet wurde. Das Metallband kann einseitig oder doppelseitig beschichtet werden.

Geeignet sind alle Metalle, aus denen sich Bänder formen lassen, die den mechanischen, chemischen und thermischen Beanspruchungen der Bandbeschichtung gewachsen sind. Gut geeignet sind Metallbänder auf der Basis von Aluminium oder Eisen. Im Falle von Eisen sind kaltgewalzte Stähle, elektrolytisch verzinkte Stähle, feuerverzinkte Stähle oder Edelstähle besonders gut geeignet. Vorzugsweise sind die Bänder 200 µm bis 2 mm dick.

Für die Bandbeschichtung durchläuft das Metallband eine Bandbeschichtungsanlage, wie sie z.B. in Römpp Lexikon Lacke und Druckfarben, Georg Thieme Verlag, Stuttgart, New York, 1998, Seite 55, "Bandbeschichtung", oder in der deutschen Patentanmeldung DE 196 32 426 A 1 beschrieben wird, mit einer Geschwindigkeit, die den Appliktions- und Härtungseigenschaften der angewandten erfindungsgemäßen Lacke angepaßt ist. Die Geschwindigkeit kann daher von Beschichtungsprozeß zu Beschichtungsprozeß sehr breit variieren. Vorzugsweise liegt sie bei 10 bis 150, bevorzugt 12 bis 120, besonders bevorzugt 14 bis 100, ganz besonders bevorzugt 16 bis 80 und insbesondere 20 bis 70 m/min.

Die Applikation der erfindungsgemäßen Lacke kann in beliebiger Weise, z. B. durch Spritzen, Gießen oder Walzlackieren, erfolgen. Von diesen Apptikationsverfahren ist das Walzlackieren besonders vorteilhaft und wird daher erfindungsgemäß bevorzugt verwendet.

Jeder Applikationsschritt des Walzlackierens kann mit mehreren Walzen durchgeführt werden. Vorzugsweise werden zwei bis vier und insbesondere zwei Walzen angewandt.

Beim Walzlackieren taucht die sich drehende Aufnahmewalze (Pick-up-Walze) in einen Vorrat des erfindungsgemäßen Lacks ein und übernimmt so den zu applizierenden Lack. Dieser wird von der Aufnahmewalze direkt oder über mindestens eine Übertragungswalze auf die sich drehende Applikationswalze übertragen. Von dieser aus wird der Lack durch gleichgerichtetes oder gegenläufiges Abstreifen auf das Band übertragen.

Der erfindungsgemäße Lack kann aber auch direkt in einen Spalt zwischen zwei Walzen gepumpt werden, was von der Fachwelt auch als NIP-Feed bezeichnet wird.

Erfindungsgemäß ist das gegenläufige Abstreifen oder das Reverse-Roller-Coating-Verfahren von Vorteil und wird deshalb bevorzugt angewandt.

Beim dem Walzlackieren können die Umlaufgeschwindigkeiten der Aufnahmewalze und der Applikationswalze von Beschichtungsprozeß zu Beschichtungsprozeß sehr stark variieren. Vorzugsweise hat die Applikationswalze eine Umlaufgeschwindigkeit, die 110 bis 125% der Bandgeschwindigkeit beträgt, und die Aufnahmewalze eine Umlaufgeschwindigkeit, die 20 bis 40% der Bandgeschwindigkeit beträgt.

Vorzugsweise werden die erfindungsgemäßen Lacke in einer Naßschichtdicke appliziert, daß nach der Aushärtung der Lackschichten Korrosionsschutzbeschichtungen einer Trockenschichtdicke von 4 bis 12, bevorzugt 5 bis 10, besonders bevorzugt 5 bis 9,5 und insbesondere 6 bis 9 µm resultieren.

Die vorstehend beschriebenen Applikationsmethoden können bei den Lacken angewandt werden, mit denen die Korrosionsschutzbeschichtungen überlackiert werden, es sei denn es handelt sich um Pulverlacke oder um Elektrotauchlackierungen, bei denen die üblichen und bekannten speziellen Applikationsmethoden eingesetzt werden, wie das elektrostatische Pulversprühen bei langsam laufenden Bändern oder das sogenannte "Powder-Cloud-Chamber"-Verfahren bei schnell laufenden Bändern und die kathodische Elektrotauchlackierung.

Die Aufheizung der erfindungsgemäßen Lackschichten bei der thermischen Härtung erfolgt vorzugsweise durch Konvektionswärmeübertragung, Bestrahlen mit nahem oder fernem Infrarot und/oder bei Bändern auf der Basis von Eisen durch elektrische Induktion erfolgen. Die maximale Objekttemperatur liegt vorzugsweise bei maximal 270 und insbesondere bei maximal 260 °C.

Die Aufheizzeit, d.h. die Zeitdauer der thermischen Härtung variiert in Abhängigkeit von dem eingesetzten erfindungsgemäßen Lack. Vorzugsweise liegt sie bei 10 s bis 2 min.

Wird im wesentlichen die Konvektionswärmeübertragung angewandt, werden bei den bevorzugten Bandlaufgeschwindigkeiten Umluftöfen einer Länge von 30 bis 50, insbesondere 35 bis 45 m, benötigt. Vorzugsweise liegt die Umlufttemperatur bei 350 °C.

Die thermische Härtung der erfindungsgemäßen Lackschichten kann noch durch die Bestrahlung mit aktinischer Strahlung unterstützt werden.

Die Härtung kann indes auch mit aktinischer Strahlung alleine erfolgen, wie dies beispielsweise in der deutschen Patentanmeldung DE 198 35 206 A 1 beschrieben wird.

Für die Härtung mit aktinischer Strahlung werden die üblichen und bekannten Strahlenquellen und optischen Hilfsmaßnahmen angewandt. Beispiele geeigneter Strahlenquellen sind Blitzlampen der Firma VISIT, Quecksilberhoch- oder -niederdruckdampflampen, welche gegebenenfalls mit Blei dotiert sind, um ein Strahlenfenster bis zu 405 nm zu öffnen, oder Elektronenstrahlquellen. Deren Anordnung ist im Prinzip bekannt und kann den Gegebenheiten des Werkstücks und der Verfahrensparameter angepasst werden.

Die vorstehend beschriebenen Härtungsmethoden können selbstverständlich auch bei den Lackschichten angewandt werden, mit denen die erfindungsgemäßen Korrosionsschutzbeschichtungen überlackiert werden.

Werden bei der Bandbeschichtung mehrere Lacke appliziert, wird dies in einer entsprechend ausgelegten Anlage durchgeführt, bei der mehrere Applikations- sowie ggf. Härtungsstationen hintereinander geschaltet sind. Oder aber nach der Applikation und der Härtung des ersten, d. h. des erfindungsgemäßen, Lacks wird das beschichtete Band wieder gewickelt, wonach das beschichtete Coil in einer zweiten, dritten etc. Bandbeschichtungsanlage einseitig oder beidseitig mit zweiten, dritten etc. Lackierungen versehen wird.

Nach der Herstellung der beschichteten Bänder können die zu beschichteten Coils gewickelt und dann an einem anderen Ort weiter verarbeitet werden; sie können aber auch, direkt von der Bandbeschichtung kommend, weiterverarbeitet werden. So können sie mit Kunststoffen laminiert oder mit abziehbaren Schutzfolien versehen werden. Sie können nach ihrer Zerkleinerung in Teile geeigneter Größe formgebend bearbeitet werden. Beispiele geeigneter formgebender Bearbeitungsmethoden sind Pressen und Tiefziehen.

Die resultierenden Coils, Profilelemente und Formteile sind kratzfest, korrosionsstabil, witterungsstabil und chemikalienstabil und können problemlos mit den unterschiedlichsten Lacken überlackiert werden. Überraschend ist, dass keine Vorbehandlung der Metallbänder mit Chromat notwendig ist, um einem vorzüglichen Korrosionsschutz zu erzielen.

Die mit den erfindungsgemäßen Korrosionsschutzbeschichtungen beschichteten Coils sind daher sehr gut für Anwendungen im Automobilbau beispielsweise für die Herstellung von Karosserieteilen und Karosserien, Nutzfahrzeugaufbauten und Verkleidungen von Caravans, im Hausgerätebereich beispielsweise für die Herstellung von Waschmaschinen, Geschirrspülmaschinen, Trocknern, Kühlschränken, Gefrierschränken oder Herden, im Leuchtenbereich für die Herstellung von Leuchten für den Innen- und Außenbereich oder im Baubereich im Innen- und Außenbereich, beispielsweise für die Herstellung von Decken- und Wandelementen, Türen, Toren, Rohrisolierungen, Rollläden oder Fensterprofilen geeignet.

### Beispiele und Vergleichsversuche

### Beispiel 1

### Die Herstellung des erfindungsgemäßen Coil-Coating-Lacks 1

In einem geeigneten Rührgefäß wurden in der angegebenen Reihenfolge 26,9 Gewichtsteile eines Einkomponentensystems auf Basis eines gesättigte; hydroxylruppenhaltigen Polyesters und eines mit Caprolactam blockierten Polyisocyanats (Vesticoat ® EPUB 877 der Firma Hüls AG), 0,6 Gewichtsteile Bis(trimethylsilyl)amin (Aerosil ® R 812 S der Firma Degussa), 2,47 Gewichtslose mit Calciumionen modifiziertes Siliziumdioxid (Shieldex ® der Firma Grace Division), 2,73 Gewichtsteile Zinkphosphat (Sicor ® ZNP/S der Firma Waardals Kjemiske Fabriken), 0,99 Gewichtsteile des Addukt von Isopropyl-tris(dioctylpyrophosphato)-titanat mit einem Mol Diisooctylphosphit (KEN-REACT ® KR38S der Firma Kenrich Petrochemicals) und 4,5 Gewichtsteile Solvesso ® 150 (ExxonMobil Chemicals) vermischt und mit einem Dissolver während zehn Minuten vordispergiert. Die resultierende Mischung wurde in einer Perlmühle mit Kühlmantel überführt und mit 2 mm-SAZ-Glasperlen vermischt. Das Mahlgut wurde während 12 Minuten auf eine Kornfeinheit nach Hegmann von 10 bis 15 µm gemahlen. Anschließend wurde das Mahlgut von den Glasperlen abgetrennt.

Das Mahlgut wurde unter Rühren in der angegebenen Reihenfolge mit 3,55 Gewichtsteilen Bisphenol-A-Epichlorhydrin (Epikote ® 834 der Firma Shell Resins), 1,78 Gewichtsteilen eines handelsüblichen selbstvernetzenden Urethanharzes (Desmodur ® VPLS 2253 der Firma Bayer AG), 0,1 Gewichtsteilen Dibutylzinndilaurat und 4,26 Gewichtsteilen Solvesso ® 150 versetzt.

Unter langsamen Dissolvern wurde der resultierenden Mischung 52,6 Gewichtsteile Eisenphosphid (Ferrophos ® HRS 2131 der Firma Nordmann Rasmann) hinzugefügt. Nach weiteren zehn Minuten war die gewünschte Verteilung der elektrisch leitfähigen Pigmente erreicht.

Der erfindungsgemäße Coil-Coating-Lack 1 war hervorragend für das Bandbeschichtungsverfahren geeignet.

### Beispiel 2

### Die Herstellung des erfindungsgemäßen Coil-Coating-Lacks 2

Beispiel 1 wurde wiederholt, nur dass anstelle des Zinkphosphats Bariummetaborat-Monohydrat Butrol ® 11 M2 der Firma Buckman) verwendet wurde.

### Vergleichsversuche V 1 und V 2

### Die Herstellung der nicht erfindungsgemäßen Coil-Coating-Lacke V 1 und V 2

Die Beispiele 1 und 2 wurden wiederholt, wobei in beiden Fällen kein KEN-REACT ® KR38S verwendet wurde.

### Beispiele 3 und 4 und Vergleichsversuche V 3 und V 4

**Die Herstellung erfindungsgemäßer (Beispiele 3 und 4) und nicht erfindungsgemäßer (Vergleichsversuche V 3 und V 4) Korrosionsschutzbeschichtungen**

Für das Beispiel 3 wurde der erfindungsgemäße Coil-Coating-Lack 1 verwendet.

Für das Beispiel 4 wurde der erfindungsgemäße Coil-Coating-Lack 2 verwendet.

Für den Vergleichsversuch V 3 wurde der nicht erfindungsgemäße Coil-Coating-Lack V 1 verwendet.

Für den Vergleichsversuch V 4 wurde der nicht erfindungsgemäße Coil-Coating-Lack V 2 verwendet.

Die Coil-Coating-Lacke wurden mit Hilfe von Stabrakeln auf Stahlplatten der Sorten Z und ZE mit chromatfreier Vorbehandlung in einer Naßschichtdicke appliziert, dass nach der Härtung in einem Durchlauftrockner bei einer Umlufttemperatur von 350 °C und einer Objekttemperatur von 220 °C Korrosionsschutzbeschichtungen einer Trockenschichtdicke von 8 µm resultierten.

Die Stahlplatten mit den Korrosionsschutzbeschichtungen wurden während 20 Tagen dem VDA-Klimawechseltest unterzogen. Anschließend wurden die minimalen und die maximalen Unterwanderungen am Schnitt und am Ritz sowie der Weißrost und der Rotrost bestimmt. Die Tabelle gibt einen Überblick über die erhaltenen Ergebnisse. Die Ergebnisse belegen die ausgezeichnete Korrosionsschutzwirkung der erfindungsgemäßen Korrosionsschutzbeschichtungen der Beispiele 3 und 4. Die Prozentangaben betreffend den Weißrost und den Rotrost beziehen sich auf die Flächenanteile der Stahlplatten, dies von Rost befallen waren.

**Tabelle: Die Korrosionsschutzwirkung der erfindungsgemäßen Korrosionsschutzbeschichtungen der Beispiele 3 und 4 und der nicht erfindungsgemäßen Korrosionsschutzbeschichtungen der Vergleichsversuche V 3 und V 4 nach dem VDA-Klimawechseltest**

| **Beispiel und** | **Unterwanderung (mm)** | | **Weißrost** | |
|---|---|---|---|---|
| | **Rotrost** | | | |
| **Vergleichsversuch** | **(minimal/maximal)** | | **(%)** | **(%)** |
| | **Schnitt** | **Ritz** | | |
| V3 | 5/7 | 1,5/4 | 30 | 30 |
| V4 | 5/8 | 1,5/4 | 30 | 40 |
| 3 | 2/6 | 0/0,5 | 5 | 30 |
| 4 | 2/6 | 0/0,5 | 0 | 25 |

## Patentansprüche

1. Coil-Coating-Lacke enthaltend eine korrosionshemmende Mischung, enthaltend
(A1) korrosionshemmende Pigmente, aus der Gruppe, bestehend aus Zinkphosphat, Zinkmetaborat und Bariummetaborat-Monohydrat,
(A 2) amorphes Siliziumdioxid, das mit Metallionen modifiziert ist, und
(A 3) mindestens eine Verbindung der allgemeinen Formel (II):
RO-M[-O-P(O)(OH)-O-P(O)(OR¹)₂]₃ · HP(O)(OR²)₂ (II),
worin die Variablen die folgende Bedeutung haben:
M ausgewählt aus der Gruppe der Lewis-Akzeptoren,
R, R¹ und R² unabhängig voneinander aliphatische und
cycloaliphatische Reste.

2. Coil-Coating-Lacke nach Anspruch 1, **dadurch gekennzeichnet, dass** die Metallionen in der Verbindung (A 2) aus der Gruppe bestehend aus Alkalimetallionen, Erdalkalimetallionen, Scandium-, Ytrrium-, Lanthan- und Lanthanidionen sowie Zink- und Aluminiumionen ausgewählt werden.

3. Coil-Coating-Lacke nach Anspruch 2, **dadurch gekennzeichnet, dass** die Metallionen Calciumionen sind.

4. Coil-Coating-Lacke nach einem der Ansprüche 1 bis 3, **dadurch gekennzeichnet, dass** M in der Verbindung (A 3) aus der Gruppe, bestehend aus Aluminium, Titan und Zirkonium, ausgewählt wird.

5. Coil-Coating-Lacke nach Anspruch 4, **dadurch gekennzeichnet, dass** M = Titan.

6. Coil-Coating-Lacke nach einem der Ansprüche 1 bis 5, **dadurch gekennzeichnet, dass** die Bestandteile (A 1), (A 2) und (A 3) in einem Gewichtsverhältnis von 1 : (0,5 bis 1,5) : (0,1 bis 2) vorliegen.

7. Coil-Coating-Lacke nach einem der Ansprüche 1 bis 5, **dadurch gekennzeichnet, dass** die korrosionshemmende Mischung
(A 4) mindestens ein elektrisch leitfähiges Pigment
enthält.

8. Coil-Coating-Lacke nach Anspruch 7, **dadurch gekennzeichnet, dass** das elektrisch leitfähige Pigment (A 4) eine mindestens bimodale Teilchengrößenverteilung aufweist.

9. Coil-Coating-Lacke nach Anspruch 7 oder 8, **dadurch gekennzeichnet, dass** das elektrisch leitfähige Pigment (A 4) aus der Gruppe, bestehend aus-elementarem Silizium und metallischen, wasserunlöslichen Phosphiden, ausgewählt wird.

10. Coil-Coating-Lacke nach Anspruch 1 bis 9, **dadurch gekennzeichnet, dass** sie den Bestandteil (A 1) in einer Menge von 0,1 bis 10 Gew.-%, bezogen auf den Festkörper des Coil-Coating-Lacks, enthalten.

11. Coil-Coating-Lacke nach Anspruch 1 bis 10, **dadurch gekennzeichnet, dass** sie den Bestandteil (A 2) in einer Menge von 0,1 bis 10 Gew.-%, bezogen auf den Festkörper des Coil-Coating-Lacks, enthalten.

12. Coil-Coating-Lacke nach einem der Ansprüche 1 bis 11, **dadurch gekennzeichnet, dass** sie den Bestandteil (A 3) in einer Menge von 0,01 bis 5 Gew.-%, bezogen auf den Festkörper des Coil-Coating-Lacks, enthalten.

13. Coil-Coating-Lacke nach einem der Ansprüche 7 bis 12, **dadurch gekennzeichnet, dass** sie den Bestandteil (A 4) in einer Menge von 10 bis 80 Gew.-%, bezogen auf den Festkörper des Coil-Coating-Lacks, enthalten.

14. Coil-Coating-Lacke nach einem der Ansprüche 7 bis 13, **dadurch gekennzeichnet, dass** das Gewichtsverhältnis von Bestandteilen (A 1), (A 2) und (A 3) einerseits zum Bestandteil (A 4) andererseits bei 1 : 20 bis 1 : 5 liegt.

15. Coil-Coating-Lacke nach einem der Ansprüche 1 bis 14, **dadurch gekennzeichnet, dass** sie Einkomponentensysteme sind.

16. Coil-Coating-Lacke nach einem der Ansprüche 1 bis 15, **dadurch gekennzeichnet, dass** sie thermisch, mit aktinischer Strahlung oder thermisch und mit aktinischer Strahlung härtbar sind.

## Claims

1. Coil coating materials comprising a corrosion inhibiting mixture comprising
(A1) corrosion-inhibiting pigments, from the group consisting of zinc phosphate, zinc metaborate, and barium metaborate monohydrate,
(A2) amorphous silica modified with metal ions, and
(A3) at least one compound of the general formula (II):
RO-M[-O-P(O) (OH)-O-P(O) (OR¹)₂]₃·HP(O) (OR²)₂ (II)
in which the variables have the following meanings:
M is selected from the group of Lewis acceptors,
R, R¹ and R² independently of one another are aliphatic and cycloaliphatic radicals.

2. Coil coating materials according to Claim 1, **characterized in that** the metal ions in the compound (A 2) are selected from the group consisting of alkali metal ions, alkaline earth metal ions, scandium ions, yttrium ions, lanthanum ions, and lanthanide ions, and zinc ions and aluminum ions.

3. Coil coating materials according to Claim 2, **characterized in that** the metal ions are calcium ions.

4. Coil coating materials according to any of Claims 1 to 3, **characterized in that** M in the compound (A 3) is selected from the group consisting of aluminum, titanium, and zirconium.

5. Coil coating materials according to Claim 4, **characterized in that** M is titanium.

6. Coil coating materials according to any of Claims 1 to 5, **characterized in that** the constituents (A 1), (A 2), and (A 3) are in a weight ratio of 1:(0.5 to 1.5):(0.1 to 2).

7. Coil coating materials according to any of Claims 1 to 5, **characterized in that** the corrosion inhibiting mixture comprises
(A 4) at least one electrically conductive pigment.

8. Coil coating materials according to Claim 7, **characterized in that** said electrically conductive pigment (A 4) has an at least bimodal particle size distribution.

9. Coil coating materials according to Claim 7 or 8, **characterized in that** said electrically conductive pigment (A 4) is selected from the group consisting of elemental silicon and metallic, water-insoluble phosphides.

10. Coil coating materials according to Claims 1 to 9, containing constituent (A 1) in an amount of from 0.1 to 10% by weight, based on the solids of the coil coating material.

11. Coil coating materials according to Claims 1 to 10, containing constituent (A 2) in an amount of from 0.1 to 10% by weight, based on the solids of the coil coating material.

12. Coil coating materials according to any of Claims 1 to 11, containing constituent (A 3) in an amount of from 0.01 to 5% by weight, based on the solids of the coil coating material.

13. Coil coating materials according to any of Claims 7 to 12, containing constituent (A 4) in an amount of from 10 to 80% by weight, based on the solids of the coil coating material.

14. Coil coating materials according to any of Claims 7 to 13, **characterized in that** the weight ratio of constituent (A 4) on the one hand to constituents (A 1), (A 2), and (A 3) on the other is from 20:1 to 5:1.

15. Coil coating materials according to any of Claims 1 to 14, which are one-component systems.

16. Coil coating materials according to any of Claims 1 to 15, which are curable thermally, with actinic radiation, or both thermally and with actinic radiation.

## Revendications

1. Peintures coil-coating contenant un mélange anticorrosion, contenant
(A1) des pigments anticorrosion, choisis dans le groupe constitué par le phosphate de zinc, le métaborate de zinc et le métaborate de baryum monohydraté,
(A2) du dioxyde de silicium amorphe qui est modifié avec des ions métalliques, et
(A3) au moins un composé de formule générale (II) :
RO-M[-O-P(O)(OH)-O-P(O)(OR¹)₂]₃-HP(O)(OR²)₂ (II),
dans laquelle les variables ont la signification suivante :
M est choisi dans le groupe des accepteurs de Lewis,
R, R¹ et R² représentent chacun indépendamment des radicaux aliphatiques et cycloaliphatiques.

2. Peintures coil-coating selon la revendication 1, **caractérisées en ce que** les ions métalliques dans le composé (A 2) sont choisis dans le groupe constitué par les ions de métaux alcalins, les ions de métaux alcalino-terreux, les ions scandium, yttrium, lanthane et de lanthanides ainsi que les ions zinc et aluminium.

3. Peintures coil-coating selon la revendication 2, **caractérisées en ce que** les ions métalliques sont des ions calcium.

4. Peintures coil-coating selon l'une quelconque des revendications 1 à 3, **caractérisées en ce que** M dans le composé (A 3) est choisi dans le groupe constitué par l'aluminium, le titane et le zirconium.

5. Peintures coil-coating selon la revendication 4, **caractérisées en ce que** M est le titane.

6. Peintures coil-coating selon l'une quelconque des revendications 1 à 5, **caractérisées en ce que** les composants (A 1), (A 2) et (A 3) se trouvent en un rapport pondéral de 1 : (0,5 à 1,5) : (0,1 à 2).

7. Peintures coil-coating selon l'une quelconque des revendications 1 à 5, **caractérisées en ce que** le mélange anticorrosion contient
(A 4) au moins un pigment conducteur de l'électricité.

8. Peintures coil-coating selon la revendication 7, **caractérisées en ce que** le pigment (A 4) conducteur de l'électricité présente une distribution au moins bimodale des tailles de particules.

9. Peintures coil-coating selon la revendication 7 ou 8, **caractérisées en ce que** le pigment (A 4) conducteur de l'électricité est choisi dans le groupe constitué par le silicium élémentaire et des phosphures métalliques insolubles dans l'eau.

10. Peintures coil-coating selon l'une quelconque des revendications 1 à 9, **caractérisées en ce qu'**elles contiennent le composant (A1) en une quantité de 0,1 à 10 % en poids, par rapport à la matière solide de la peinture coil-coating.

11. Peintures coil-coating selon l'une quelconque des revendications 1 à 10, **caractérisées en ce qu'**elles contiennent le composant (A 2) en une quantité de 0,1 à 10 % en poids, par rapport à la matière solide de la peinture coil-coating.

12. Peintures coil-coating selon l'une quelconque des revendications 1 à 11, **caractérisées en ce qu'**elles contiennent le composant (A 3) en une quantité de 0,01 à 5 % en poids, par rapport à la matière solide de la peinture coil-coating.

13. Peintures coil-coating selon l'une quelconque des revendications 7 à 12, **caractérisées en ce qu'**elles contiennent le composant (A 4) en une quantité de 10 à 80 % en poids, par rapport à la matière solide de la peinture coil-coating.

14. Peintures coil-coating selon l'une quelconque des revendications 7 à 13, **caractérisées en ce que** le rapport pondéral des composants (A 1), (A 2) et (A 3) d'une part au composant (A 4) d'autre part vaut de 1 : 20 à 1 : 5.

15. Peintures coil-coating selon l'une quelconque des revendications 1 à 14, **caractérisées en ce qu'**elles sont des systèmes monocomposants.

16. Peintures coil-coating selon l'une quelconque des revendications 1 à 15, **caractérisées en ce qu'**elles sont durcissables thermiquement, par un rayonnement actinique ou thermiquement et par un rayonnement actinique.
